# DEMANDE DE BREVET EUROPEEN

(11) **EP 1 431 691 A2**
(43) Date de publication de la demande: **23.06.2004**
(21) Numéro de dépôt: 03300213.0
(22) Date de dépôt: 14.11.2003
(51) Int. Cl.: F25J 3/02, C01B 23/00, F25J 3/04

(54) **Procédé et installation de production d'un mélange krypton/xénon à partir d'air**

(30) Priorité: 25.11.2002 FR 0214742
(71) Demandeur: L'air liquide - Société anonyme à Directoire et Conseil de Surveillance pour l'Etude et l'Exploitation des Procédés G. Claude, 75321 Paris Cedex 07 (FR)
(72) Inventeur: Fuentes, François, L'air Liquide SA, 78110 Le Vésinet (FR)
(74) Mandataire: Mercey, Fiona Susan

(57) **Abrégé**

Suivant ce procédé :
(a) on distille de l'air dans au moins un appareil de distillation d'air (8) de façon à produire un flux d'oxygène liquide contenant l'essentiel du krypton et du xénon de l'air, et l'on vaporise ce flux d'oxygène liquide ;
(b) on effectue avec au moins une partie de l'oxygène gazeux obtenu dans l'étape (a) une oxydation partielle d'au moins un hydrocarbure, de façon à produire un gaz de synthèse contenant au plus 0,1 ppm mol. d'oxygène ; et
(c) on élimine du gaz de synthèse les constituants autres que le krypton et le xénon.

## Description

La présente invention est relative à un procédé et une installation de production d'un mélange krypton/xénon à partir d'air.

La source principale de krypton et de xénon est l'atmosphère, où ils sont présents à l'état de traces, à savoir respectivement 1,135 ppm et 0,086 ppm (ppm : partie par million).

La méthode de purification normalement utilisée consiste à extraire une mixture enrichie d'un appareil de séparation d'air par voie cryogénique, typiquement au niveau du vaporiseur d'oxygène liquide, puis à concentrer cette mixture par distillation cryogénique. On obtient ainsi des teneurs en krypton + xénon de l'ordre de 99%. Puis cette mixture est séparée en krypton et en xénon, en général en laboratoire.

Un problème principal posé par cette méthode réside dans la sécurité. En effet, de par leurs points d'ébullition, le krypton et le xénon, qui sont des gaz rares lourds, se retrouvent essentiellement dans l'oxygène liquide, en même temps que les hydrocarbures présents à l'état de traces dans l'air. Un enrichissement en une seule étape risque donc de conduire à un ratio hydrocarbures/oxygène de nature explosive.

Il est donc nécessaire d'effectuer un premier enrichissement partiel par distillation, puis d'éliminer les hydrocarbures, ce qui s'effectue par voie chimique à une température non cryogénique, puis de réaliser une nouvelle distillation cryogénique. De plus, la réaction chimique créant des composés (notamment CO₂ ou H₂O) pouvant se solidifier aux températures de distillation du mélange, il est nécessaire d'intercaler une étape d'adsorption (ou équivalent) en aval du réacteur d'élimination des hydrocarbures.

On peut encore noter que l'équipement de purification du krypton/xénon est de taille importante compte-tenu de la faible teneur de ces constituants dans l'oxygène liquide (quelques ppm à quelques dizaines de ppm).

L'invention a pour but de fournir un procédé de production de krypton/xénon à partir d'air qui soit sûr et nécessite un équipement de taille relativement réduite.

A cet effet, l'invention a pour objet un procédé de production d'un mélange krypton/xénon à partir d'air, caractérisé en ce que :
(a) on distille de l'air dans au moins un appareil de distillation d'air de façon à produire un flux d'oxygène liquide contenant l'essentiel du krypton et du xénon de l'air, et l'on vaporise ce flux d'oxygène liquide ;
(b) on effectue avec au moins une partie de l'oxygène gazeux obtenu dans l'étape (a) une oxydation partielle d'au moins un hydrocarbure, de façon à produire un gaz de synthèse contenant moins de 0,1 ppm mol. d'oxygène ; et
(c) on élimine du gaz de synthèse les constituants autres que le krypton et le xénon.

Le procédé suivant l'invention peut comporter une ou plusieurs des caractéristiques suivantes :
- on réalise l'oxydation partielle par réaction de l'oxygène avec un excès d'hydrocarbure(s) et éventuellement avec de la vapeur d'eau.
- on réalise l'oxydation partielle par réaction de l'oxygène avec du gaz naturel, du méthane, du naphta ou du charbon.
- l'étape (c) comporte une dessiccation/décarbonatation suivie d'une séparation cryogénique.
- la séparation cryogénique comporte une série d'étapes produisant un flux enrichi en krypton/xénon et contenant en outre essentiellement du méthane et du monoxyde de carbone, un flux d'hydrogène, un flux de monoxyde de carbone et un flux résiduaire.
- ladite série d'étapes comprend un envoi de monoxyde de carbone liquide en tête d'une première colonne, une détente du liquide de cuve de cette colonne, l'élimination de l'hydrogène dans une deuxième colonne alimentée en tête par ledit liquide de cuve détendu, une détente du liquide de cuve de la deuxième colonne, et l'introduction de ce liquide détendu dans une colonne basse pression alimentée en tête en monoxyde de carbone liquide et produisant en tête du monoxyde de carbone et en cuve ledit flux enrichi en krypton/xénon.
- la séparation cryogénique comporte en outre, éventuellement après réchauffage intermédiaire du flux enrichi en krypton/xénon, une séparation cryogénique du krypton et du xénon d'une part, des autres constituants de ce flux d'autre part.

Selon un autre objet de l'invention, il est prévu une installation de production d'un mélange krypton/xénon à partir d'air, caractérisée en ce qu'elle comprend :
- un appareil de distillation d'air qui produit un flux d'oxygène liquide contenant l'essentiel du krypton et du xénon de l'air, cet appareil étant associé à un vaporiseur pour vaporiser ce flux d'oxygène liquide ;
- un réacteur d'oxydation partielle alimenté d'une part par le flux d'oxygène vaporisé, d'autre part par un gaz qui contient au moins un hydrocarbure, ce réacteur produisant un gaz de synthèse contenant au plus 0,1 ppm mol. d'oxygène ; et
- des moyens d'élimination du gaz de synthèse des constituants autres que le krypton et le xénon. Selon d'autres aspects facultatifs :

- lesdits moyens d'élimination comprennent des moyens de dessiccation/décarbonatation suivis d'une unité de séparation cryogénique.
- l'unité de séparation cryogénique comprend une combinaison de colonnes adaptées pour produire un flux enrichi en krypton/xénon et contenant en outre essentiellement du méthane et du monoxyde de carbone, un flux d'hydrogène, un flux de monoxyde de carbone et un flux résiduaire.
- l'unité de séparation cryogénique comprend une première colonne, des moyens pour envoyer du monoxyde de carbone liquide en tête de la première colonne, des moyens de détente du liquide de cuve de cette première colonne, une deuxième colonne d'élimination d'hydrogène alimentée en tête par ledit liquide de cuve détendu, des moyens de détente du liquide de cuve de ladite deuxième colonne, et une colonne basse pression alimentée à un niveau intermédiaire par le liquide de cuve détendu de la deuxième colonne et en tête par du monoxyde de carbone liquide, cette colonne basse pression produisant en tête du monoxyde de carbone et en cuve ledit flux enrichi en krypton/xénon.
- l'unité de séparation cryogénique comprend en outre une colonne de séparation du krypton et du xénon d'une part, des autres constituants de ce flux d'autre part.

Des exemples de mise en oeuvre de l'invention vont maintenant être décrits en regard des dessins annexés, sur lesquels :
- la Figure 1 est un schéma général d'une installation conforme à l'invention ;
- la Figure 2 représente schématiquement une partie de cette installation ; et
- la Figure 3 est un schéma partiel d'une variante.

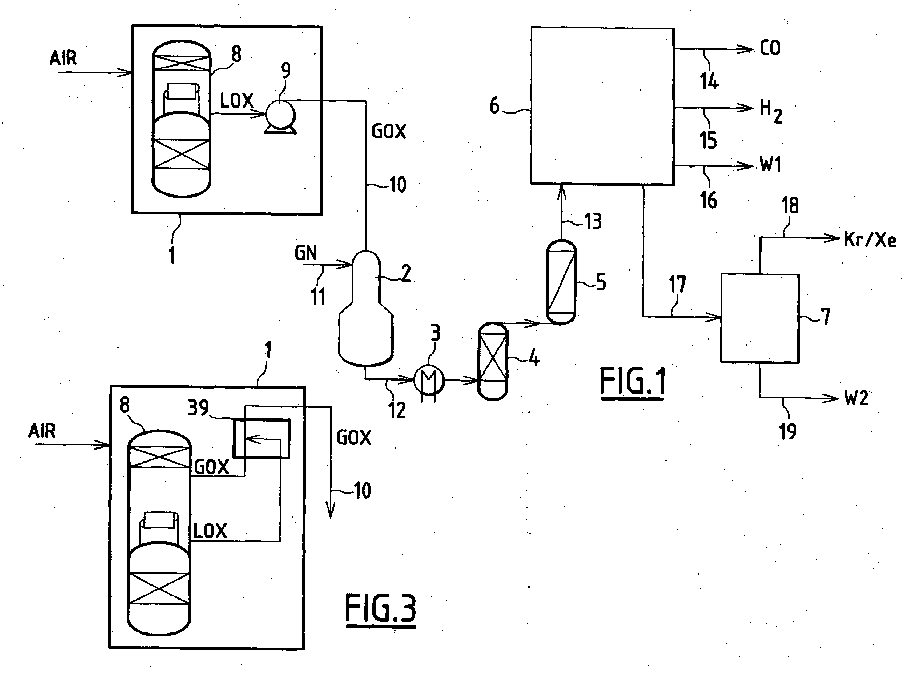

L'installation représentée sur la Figure 1 comprend une boîte froide 1 qui contient un appareil de distillation d'air à double colonne, un réacteur d'oxydation partielle 2, un réfrigérant 3, un appareil 4 de décarbonatation par lavage aux amines, un appareil 5 de dessiccation-décarbonation par adsorption, une boîte froide 6 de production de monoxyde de carbone CO, d'hydrogène, d'un premier flux résiduaire W1 et d'une mixture riche en krypton/xénon, et une boîte froide 7 de séparation du krypton/xénon d'une part et d'un second flux résiduaire W2 d'autre part.

En fonctionnement, l'air atmosphérique, préalablement comprimé et épuré en eau et en CO2, est refroidi dans la boîte froide 1 et distillé dans la double colonne de distillation 8 contenue dans celle-ci, qui est de structure classique, à savoir une colonne moyenne pression et une colonne basse pression couplées par un vaporiseur-condenseur. De l'oxygène liquide LOX, soutiré de la cuve de la colonne basse pression, est pompé par une pompe cryogénique 9 à une haute pression, typiquement de 20 bars, et est vaporisé sous cette haute pression pour former un flux d'oxygène gazeux GOX, lequel contient sensiblement tout le krypton et le xénon contenus dans l'air entrant. L'oxygène liquide se vaporise généralement dans l'échangeur principal de l'ASU ou dans un échangeur dédié par échange de chaleur avec un débit d'air ou d'azote pressurisé.

Cet oxygène alimente via une conduite 10 le réacteur 2, lequel reçoit également du gaz naturel (typiquement 98% CH₄ et 2% N₂), en excès, via une conduite 11. Eventuellement de la vapeur d'eau participe à la réaction si l'oxydation partielle est du type ATR.

L'oxygène peut provenir de plusieurs ASU.

On produit ainsi via une conduite 12 un gaz de synthèse contenant moins de 0,1 ppm mol. d'oxygène qui, après refroidissement en 3, est débarrassé de son dioxyde de carbone CO₂ en 4 et de son eau et de des traces de son dioxyde de carbone CO₂ en 5.

C'est ainsi un mélange d'hydrogène, de CO, de méthane n'ayant pas réagi, contenant le krypton/xénon et des traces essentiellement d'azote et d'argon, qui pénètre dans la boîte froide 6 via une conduite 13.

De la boîte froide 6, le CO sort par une conduite 14, l'hydrogène par une conduite 15, le résiduaire W1, constitué essentiellement de CO et d'hydrogène, par une conduite 16, et la mixture riche en krypton/xénon par une conduite 17.

La boite froide 7, alimentée par la conduite 17, contient essentiellement une colonne de distillation qui produit en tête, via une conduite 18, le mélange krypton/xénon et en cuve, via une conduite 19, le résiduaire W2, constitué essentiellement de méthane, de CO, d'azote et d'argon.

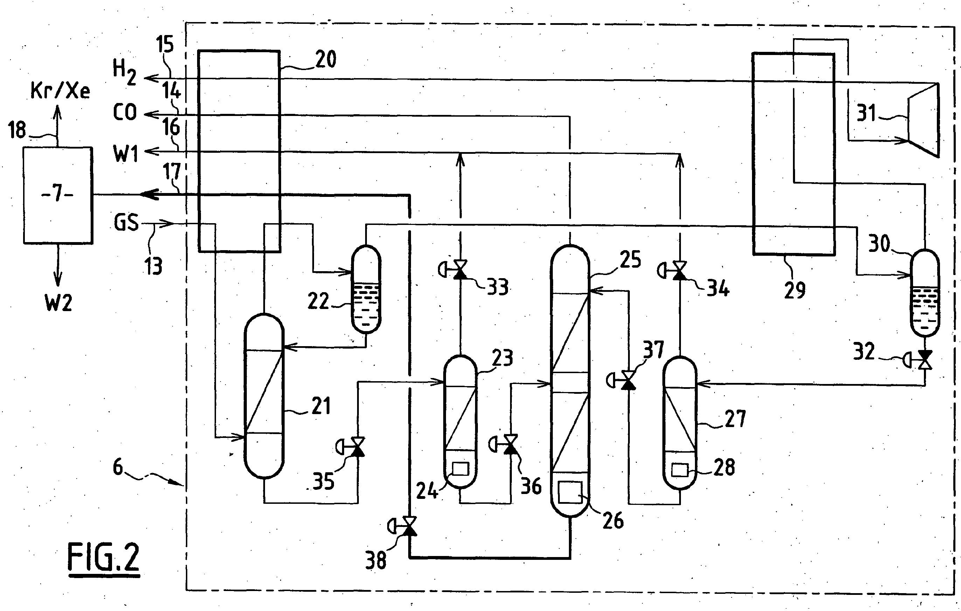

Comme représenté sur la Figure 2, la boite froide 6 comprend essentiellement :
- un échangeur de chaleur principal 20 du type à contre-courant ;
- une colonne haute pression 21 de lavage au CO, munie en tête d'un séparateur de phases 22 ;
- une colonne de flash 23 à pression intermédiaire, munie d'un rebouilleur de cuve 24 ;
- une colonne basse pression 25 munie d'un rebouilleur de cuve 26 ;
- une colonne de flash 27 à pression intermédiaire, munie d'un rebouilleur de cuve 28 ;
- un échangeur de chaleur secondaire 29 ;
- un séparateur de phases haute pression 30 ; et
- une turbine de détente 31.

En fonctionnement, le gaz de synthèse véhiculé par la conduite 13, refroidi dans la partie chaude de l'échangeur 20, est introduit en cuve la colonne 21. Les constituants légers, essentiellement l'hydrogène et le monoxyde de carbone produits en tête de cette colonne, sont refroidis et partiellement condensés dans la partie froide de l'échangeur 20 puis introduits dans le séparateur de phases 22. Le liquide de cuve de ce séparateur, constitué essentiellement de CO, est renvoyé en reflux en tête de la colonne 21, tandis que la phase vapeur, de nouveau refroidie et partiellement condensée du bout chaud au bout froid de l'échangeur 29, est introduite dans le séparateur de phases 30. Ce dernier produit en tête de l'hydrogène haute pression et en cuve du CO haute pression.

L'hydrogène haute pression, réchauffé dans l'échangeur 29, est détendu au voisinage de la pression atmosphérique dans la turbine 31, puis est réchauffé à travers l'échangeur 29 puis l'échangeur 20, ce qui assure la tenue en froid de la boite froide 6. Ce flux est ensuite récupéré via la conduite 15.

Le CO liquide recueilli dans le séparateur 30, contenant des traces d'hydrogène, est détendu à une pression intermédiaire dans une vanne de détente 32 et introduit en tête de la colonne 27. Cette colonne produit en tête un mélange H₂/CO et en cuve du CO liquide.

Le liquide de cuve de la colonne 21, constitué essentiellement de méthane et de CO et contenant le krypton/xénon et des traces d'hydrogène, est détendu à une pression intermédiaire dans une vanne de détente 35 et introduit en tête de la colonne 23. Un mélange H₂/CO s'évacue en tête de cette colonne.

Les flux H₂/CO issus des colonnes 23 et 27 sont, après détente au voisinage de la pression atmosphérique dans des vannes de détente respectives 33 et 34, réunis dans une même conduite pour former le gaz résiduaire W1 , lequel est réchauffé en 20 et évacué via la conduite 16.

Le liquide de cuve de la colonne 23 est de nouveau détendu, à basse pression, dans une vanne de détente 36 puis introduit à un niveau intermédiaire de la colonne 25. Le CO liquide soutiré de la cuve de la colonne 27 est détendu à la basse pression dans une vanne de détente 37 et introduit en tête de la colonne 25. Ainsi cette colonne sépare d'une part le CO, qui est soutiré en tête puis réchauffé en 20 et récupéré via la conduite 14, et d'autre part un mélange méthane/CO contenant le krypton/xénon et des traces d'azote et d'argon.

Ce mélange, éventuellement après détente au voisinage de la pression atmosphérique dans une vanne de détente 38 , est réchauffé en 20 puis récupéré via la conduite 17, pour être ensuite traité dans la boite froide 7 comme décrit plus haut.

Comme on le comprend, de nombreuses variantes peuvent être envisagées. Par exemple, le chauffage des rebouilleurs de cuve 24, 26 et 28 peut être réalisé au moyen de tout flux approprié disponible à une pression convenable dans l'unité, par exemple au moyen de gaz de synthèse. De même, on peut mettre en oeuvre un cycle à monoxyde de carbone pour assurer le maintien en froid et/ou le rebouillage des colonnes 23, 25 et 27, comme connu en soi.

Par ailleurs, les boites froides 1, 6 et 7 peuvent être plus ou moins combinées en ce qui concerne leur implantation et/ou leur maintien en froid. Par exemple, si l'on combine les boites froides 6 et 7, le liquide de cuve de la colonne 25 peut être envoyé directement à la colonne finale de séparation du krypton/xénon, sans réchauffage intermédiaire.

Ainsi, suivant le procédé décrit ci-dessus, on produit de l'oxygène, que l'on comprime, afin d'effectuer une première concentration du krypton/xénon de l'air. Puis on produit un gaz de synthèse sans oxygène et ayant une faible teneur en méthane, contenant tout le krypton/xénon, ce qui permet ensuite d'utiliser une unité d'enrichissement en krypton/xénon de taille réduite. Grâce à l'absence d'oxygène dans le gaz de synthèse, il n'y a pas de risque d'explosion dans cette unité.

Les deux colonnes de flash 23 et 27, à pressions intermédiaires, permettent d'éliminer l'hydrogène dissous dans le monoxyde de carbone destiné à la colonne 25.

Il est à noter qu'une telle récupération du krypton/xénon peut être implémentée facilement sur une unité existante de production d'hydrogène et de monoxyde de carbone. Cette unité peut être basée sur un procédé de séparation d'hydrogène et de CO différent de celui de la Figure 2, par exemple sur un procédé dit « par lavage au méthane ». Cependant, le procédé de la Figure 2 est particulièrement bien approprié pour la récupération du krypton/xénon.

La Figure 3 illustre une variante de la boite froide 1, dans laquelle l'oxygène envoyé au réacteur 2 est constitué pour partie d'oxygène gazeux soutiré en cuve de la colonne basse pression de la double colonne 8, et pour partie d'oxygène liquide soutiré en cuve de la même colonne, vaporisé dans un échangeur de chaleur 39 de la boite froide 1 et réuni au flux d'oxygène gazeux.

## Revendications

1. Procédé de production d'un mélange krypton/xénon à partir d'air, **caractérisé en ce que** :
(a) on distille de l'air dans au moins un appareil de distillation d'air (8) de façon à produire un flux d'oxygène liquide contenant l'essentiel du krypton et du xénon de l'air, et l'on vaporise ce flux d'oxygène liquide ;
(b) on effectue avec au moins une partie de l'oxygène gazeux obtenu dans l'étape (a) une oxydation partielle d'au moins un hydrocarbure, de façon à produire un gaz de synthèse contenant au plus 0,1 ppm mol. d'oxygène ; et
(c) on élimine du gaz de synthèse les constituants autres que le krypton et le xénon.

2. Procédé suivant la revendication 1, **caractérisé en ce qu'**on réalise l'oxydation partielle par réaction de l'oxygène avec un excès d'hydrocarbure(s) et éventuellement avec de la vapeur d'eau.

3. Procédé suivant la revendication 1 ou 2, **caractérisé en ce qu'**on réalise l'oxydation partielle par réaction de l'oxygène avec du gaz naturel, du méthane, du naphta ou du charbon.

4. Procédé suivant l'une quelconque des revendications 1 à 3, **caractérisé en ce que** l'étape (c) comporte une dessiccation/décarbonatation suivie d'une séparation cryogénique.

5. Procédé suivant la revendication 4, **caractérisé en ce que** la séparation cryogénique comporte une série d'étapes produisant un flux enrichi en krypton/xénon et contenant en outre essentiellement du méthane et du monoxyde de carbone, un flux d'hydrogène, un flux de monoxyde de carbone et un flux résiduaire.

6. Procédé suivant la revendication 5, **caractérisé en ce que** ladite série d'étapes comprend un envoi de monoxyde de carbone liquide en tête d'une première colonne (21), une détente (en 35) du liquide de cuve de cette colonne, l'élimination de l'hydrogène dans une deuxième colonne (23) alimentée en tête par ledit liquide de cuve détendu, une détente (en 36) du liquide de cuve de la deuxième colonne (23), et l'introduction de ce liquide détendu dans une colonne basse pression (25) alimentée en tête en monoxyde de carbone liquide et produisant en tête du monoxyde de carbone et en cuve ledit flux enrichi en krypton/xénon.

7. Procédé suivant la revendication 5 ou 6, **caractérisé en ce que** la séparation cryogénique comporte en outre, éventuellement après réchauffage intermédiaire du flux enrichi en krypton/xénon, une séparation cryogénique du krypton et du xénon d'une part, des autres constituants de ce flux d'autre part.

8. Installation de production d'un mélange krypton/xénon à partir d'air, **caractérisée en ce qu'**elle comprend :
- un appareil de distillation d'air (8) qui produit un flux d'oxygène liquide contenant l'essentiel du krypton et du xénon de l'air, cet appareil étant associé à un vaporiseur pour vaporiser ce flux d'oxygène liquide ;
- un réacteur d'oxydation partielle (2) alimenté d'une part par le flux d'oxygène vaporisé, d'autre part par un gaz qui contient au moins un hydrocarbure, ce réacteur produisant un gaz de synthèse contenant au plus 0,1 ppm mol. d'oxygène ; et
- des moyens (3 à 7) d'élimination du gaz de synthèse des constituants autres que le krypton et le xénon.

9. Installation suivant la revendication 8, **caractérisée en ce que** lesdits moyens d'élimination (3 à 7) comprennent des moyens (4, 5) de dessiccation/décarbonatation suivis d'une unité de séparation cryogénique (6, 7).

10. Installation suivant la revendication 9, **caractérisée en ce que** l'unité de séparation cryogénique (6, 7) comprend une combinaison de colonnes (21, 23, 25, 27) adaptées pour produire un flux enrichi en krypton/xénon et contenant en outre essentiellement du méthane et du monoxyde de carbone, un flux d'hydrogène, un flux de monoxyde de carbone et un flux résiduaire.

11. Installation suivant la revendication 9 ou 10, **caractérisée en ce que** l'unité de séparation cryogénique (6, 7) comprend une première colonne (21), des moyens pour envoyer du monoxyde de carbone liquide en tête de la première colonne, des moyens (35) de détente du liquide de cuve de cette première colonne, une deuxième colonne (23) d'élimination d'hydrogène alimentée en tête par ledit liquide de cuve détendu, des moyens (36) de détente du liquide de cuve de ladite deuxième colonne, et une colonne basse pression (25) alimentée à un niveau intermédiaire par le liquide de cuve détendu de la deuxième colonne (23) et en tête par du monoxyde de carbone liquide, cette colonne basse pression (25) produisant en tête du monoxyde de carbone et en cuve ledit flux enrichi en krypton/xénon.

12. Installation suivant la revendication 10 ou 11, **caractérisée en ce que** l'unité de séparation cryogénique (6, 7) comprend en outre une colonne de séparation du krypton et du xénon d'une part, des autres constituants de ce flux d'autre part.
